# EUROPEAN PATENT SPECIFICATION

(11) **EP 3 548 317 B1**
(45) Date of publication and mention of the grant of the patent: **13.01.2021**
(21) Application number: 17917224.2
(22) Date of filing: 01.12.2017
(51) Int. Cl.: B62D 53/06, B60D 1/24, B60D 1/01, B60D 1/62

(54) **TRAILER MODE ESTIMATION METHOD FROM REAR SUSPENSION LOAD**
VERFAHREN ZUR KALKULATION EINES ANHÄNGERMODUS AUS EINER HINTERRADAUFHÄNGUNGSLAST
PROCÉDÉ D'ESTIMATION DE MODE D'UNE REMORQUE EN FONCTION DE LA CHARGE APPLIQUÉE À UNE SUSPENSION ARRIÈRE

(30) Priority: 01.12.2016 TR 201617620
(43) Date of publication of application: 09.10.2019
(73) Proprietor: FORD OTOMOTIV SANAYI ANONIM SIRKETI, Istanbul (TR)
(72) Inventor: DURUS, Mahmut, Istanbul (TR); KELES, Taylan, 34885 Istanbul (TR); ARAY, Ahmet, Istanbul (TR); SAHBAZ, Cansu, 34885 Istanbul (TR); SAT, Yusuf, 34885 Istanbul (TR); ARSLAN, Ozan, 34885 Istanbul (TR)
(74) Representative: Dericioglu, E. Korhan
(86) International application number: PCT/TR2017/050617
(87) International publication number: WO 2019/027382

(56) References cited:
- EP-A2- 1 595 774
- WO-A1-2006/043872
- GB-A- 2 467 978
- JP-A- 2001 121 938
- JP-A- 2003 170 722

## Description

### Field of the Invention

The present invention relates to a trailer mode estimation method which allows for determining, from the load amount of the rear suspension of the tow truck, whether the trailer is in detachment or unloading mode in heavy commercial vehicles with air suspension in the rear axle used as tow trucks.

### Background of the Invention

Tow truck type heavy commercial vehicles are densely used in transportation. Transportation of loads including various goods, containers, fuel, concrete, cement, soil, iron, aggregate, etc. is made by tow truck type vehicles. Road transport vehicles, e.g. trailers, semi-trailers, and other type of trailers are used depending on such parameters as the capacity, size, and type of the load to be carried. By attaching trailers and similar vehicles for carrying load at the rear of the tow truck type vehicles, high-capacity transportation is achieved.

Coupling of trailer-like load carriers to the heavy commercial tow truck type vehicles is ensured by the so-called fifth wheel and king pin (trailer pin) mounting brackets. The fifth wheel is mounted in the chassis of the tow trucks. King pin, on the other hand, is a mounting element which is disposed on the trailer and enables the trailer to be coupled to the fifth wheel. The king pin disposed on the trailer is engaged in the fifth wheel and locked in a secure manner, thereby achieving tow truck and trailer attachment.

In tow truck-trailer coupling, the loads from the trailer are transferred to the fifth wheel by means of the king pin, and to the chassis and axles from the fifth wheel. With the suspension systems provided on the tow truck, the load on the chassis is distributed and leveled. In tow trucks, one of the suspension types utilized for load balancing is air suspensions. The air bellows disposed in air suspensions is used for balancing the load on the vehicle and maintaining the chassis level at the preferred height. By air bellows is filled with air and then emptied, thereby lifting the chassis. As for the detachment of the trailer from the tow truck, it is similarly performed by removing the fifth wheel-king pin connection. Prior to the detachment of the trailer from the tow truck, the legs on the trailer are revealed, and the trailer is located on the ground standing on the legs.

Trailers and tow trucks are generally manufactured by individual companies, being systems which are not in communication with one another. Due to the fact that tow trucks carry various trailers of different types and that the control systems provided on the tow truck-trailer coupling are costly, a dedicated control between the trailer and tow truck does not exist. In some embodiments, there exist control systems specially used between tow truck and trailer, and in such systems the legs of the trailer are lowered via control by electronic systems and the contact of the legs with the ground is sent as information to the tow truck. Upon the system receiving the information that the trailer legs are on the ground, the trailer is detached. Nevertheless, such system does not exist in mechanical trailer legs lowered by the user. For mechanical trailer legs, the information that the trailer leg is on the ground and the trailer is now in detachment mode (the trailer is being detached) does not reach the user. Even if communicating or non-communicating trailers are coupled to the tow truck, it is not the case for every trailer to produce the information that the trailer leg is lowered due to the possibility of the use of different trailers by the tow trucks. Moreover, the communication systems are not preferred due to the high cost thereof. In order to overcome the technical problem of understanding P (i.e. determining) whether the trailer legs are on the ground or not, it is required that the information that the trailer legs are on the ground is directly displayed in the tow truck and noticed by the user.

Since one cannot directly tell from the tow truck whether the trailer legs are on the ground, this may result in accidents while attaching the trailer joint to the tow truck during trailer detachment process. In case the user lowers the trailer legs and forgets to lower the air suspension and drives the vehicle forward, the load on the fifth wheel shifts to the trailer leg the moment the trailer and the fifth wheel are separated. When the load on the fifth wheel, and hence on the air suspension decreases, the bellows filled with air tend to jump up. In this case, the chassis and the trailer collides and the components in the respective area are damaged. It is required, when the trailer legs are lowered down to the ground, to deflate and lower the air suspension. The detachment of the vehicle from the trailer without lowering the air suspension first always creates a risk of accident.

In the existing applications, the information as to whether trailer legs are one the ground or not is produced by the information signals from the trailer. However, complicated and costly electronic systems must be added in the trailer in order to be able to receive such information. Because different trailers can be coupled to tow trucks, these electronic systems must be applied to every trailer. Further, it is not possible to apply such electronic systems in the trailers with mechanical leg. With the present invention, the aforementioned technical problem is solved by the equipment that already exists in the heavy commercial vehicles used in the art. For overcoming the technical problem, the already existing equipment on the vehicles is used and the need for mounting any additional equipment on the vehicle or trailer is eliminated.

In the U.S. Patent Application No. US20040157703 A1 in the state of the art, a traction vehicle is disclosed. When the vehicle is stopping, it is determined via the sensors and control unit whether the trailer is coupled to the vehicle. In the present invention, however, whether the trailer is coupled to the vehicle or not is determined through the rear suspension loads. Thus, it is no longer necessary to provide any additional equipment either in the vehicle or in the trailer.

The International Patent Application No. WO2016020030 A1 in the state of the art discloses a method and system developed for operating the suspension system for a vehicle, in particular a commercial vehicle. As disclosed in this document, there are more than one modes and the suspension system is controlled based on various variables. In this document, the technical problems experienced while detaching the traction vehicle and the trailer are overcome. In the present invention, however, the technical problems experienced during the detachment of the trailer from the tow truck are disclosed, wherein the solutions as to how such problems will be overcome by determining the rear suspension loads, without any additional equipment to that of the vehicle.

Further known is European patent application EP 1 595 774 A2, which discloses a method for determining, from a load amount of the rear suspension of a tow truck, detachment of a trailer. The document is considered as being the closest prior art and discloses the preamble of independent claim 1.

It is aimed by the present invention to determine the detachment-unloading mode of the trailer by way of weight measurement from the rear suspension of the tow truck and lowering the suspension bellows height. In the former case, the change in the rear suspension of the tow truck is detected and for this, the air bellows is emptied and the change in the weight is measured. The decision as to whether the trailer detachment mode is present according to the change in weight is made, and only under suitable circumstances is the trailer detached from the tow truck such that the chassis of the tow truck will not collide with the trailer joint.

### Objects of the Invention

The object of the present invention is to provide a trailer mode estimation method whereby the information that the trailer legs are lowered, i.e. the information that the trailer is in detachment mode, is sensed directly through the tow truck. Another object of the present invention is to provide a trailer mode estimation method in which the trailer detachment mode will be detected regardless of the used trailer.

And another object of the present invention is to provide a trailer mode estimation method which prevents the risk of trailer joint colliding with and getting stuck in the chassis, in trailer detachment mode.

### Summary of the Invention

In the trailer mode estimation method having been developed in order to achieve the objects of the present invention and defined in the first claim and other claims dependent thereon, the trailer detachment-unloading mode of the tow truck is estimated. The amount of load on the air suspension is defined based on the measurement values received from the height sensor or pressure sensor. In case a decreasing tendency in the air suspension load is detected, the height level of the air suspension is lowered and the load status is measured again. If there is no change in the load imposed on the vehicle when the air suspension height is lowered, it is understood that the trailer is being unloaded, and no operation is performed as such. If a decreasing tendency is measured in the load value of the rear suspension when the air suspension height level is reduced, it is understood that the trailer is at the stage of being detached. The suspension level is lowered upon the detachment of the trailer or upon determining that the detachment mode is present, whereby the chassis is prevented from colliding with the trailer. The level of the rear suspension can be lowered when the trailer detachment mode is present, or when the vehicle starts to move. Thus, the trailer detachment mode is estimated only the equipment and sensors provided on the tow truck itself, and the chassis is prevented from colliding with the trailer by lowering down the rear suspension height.

### Detailed Description of the Invention

The trailer situation estimation method which has been developed for achieving the objects of the present invention is illustrated in the accompanying drawings, in which:
- Fig. 1.: Schematic view showing the position in which the trailer is coupled to the tow truck.
- Fig. 2.: Schematic view showing the position in which the trailer is detached from the tow truck.
- Fig. 3.: Schematic view showing collision of chassis and trailer, which is a technical problem of the art.
- Fig. 4.: Side view of the air suspension and air bellows.

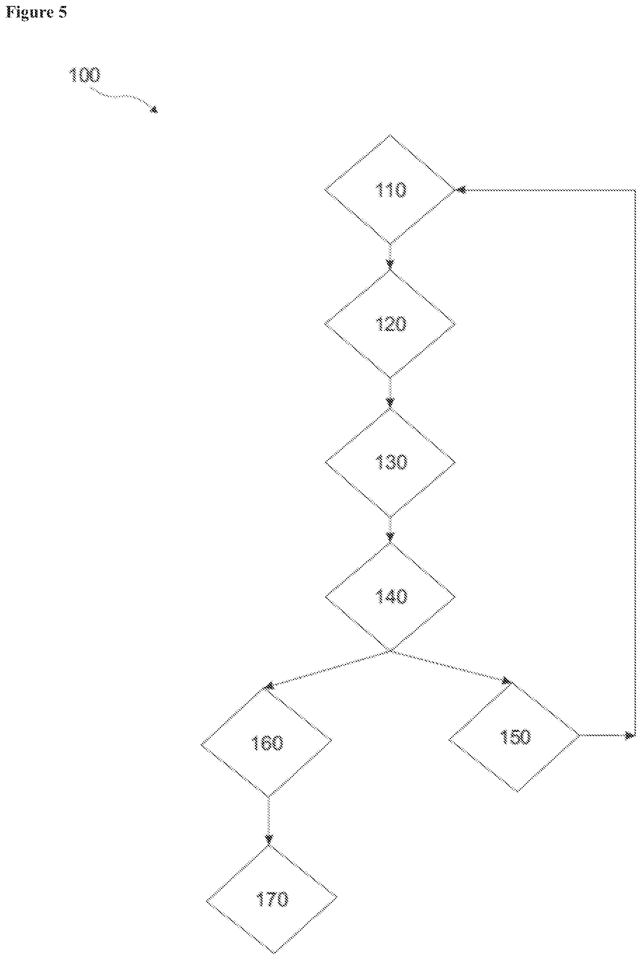

- Fig. 5.: Flow chart of the trailer mode estimation method.

The parts shown in the drawings are enumerated individually and the reference numerals corresponding thereto are given below.
100. Trailer mode estimation method
C. Tow truck
D. Trailer
A. Leg
T. Fifth wheel
S. Air suspension
H. Air bellows
V. Control valve
Y. Height sensor
B. Pressure sensor
ECU. Control unit

A trailer mode estimation method (100) which allows for determining, from the load amount of the rear suspension of the tow truck (C), whether the trailer (D) is in detachment or unloading mode in heavy commercial vehicles with air suspension (S) in the rear axle used as tow trucks, wherein said method comprises the process steps as disclosed in independent claim 1.

Tow trucks (C) may have different types of suspension systems. Air suspension (S) is one of the commonly used suspension systems in tow trucks (C). The trailer mode estimation method (100) according to the invention is a method developed for the vehicles in the tow truck (C) rear suspension of which air suspension (S) is used.

The trailer (D) is coupled to the fifth wheel (T) disposed provided on the tow truck (C). The rear suspension of the tow truck (C) is an air suspension (S). The air suspension (S) comprises air bellows (H) and a control valve (V) enabling the air bellows (H) to be filled with air and emptied. The control valve (V) is controlled by the control unit (ECU). The control unit (ECU) can be the vehicle's control unit (ECU), or alternatively an independent separate control unit (ECU) allowing the air suspension (S) to be controlled.

The load balancing of the air suspension (S) is performed depending on the load/fullness_mode of the trailer (D) and the load imposed on the tow truck (C). While load balancing is being done, the air bellows (H) is filled with air and emptied, said air being controlled by opening/closing the control valve (V). When the air bellows (H) is filled with air, the height of the air bellows (H) is increased and the tow truck (C) chassis is raised; in contrast, when the air in the air bellows (H) is emptied, the height of the air bellows (H) is decreased and the tow truck (C) chassis is lowered. The operation is performed according to the value measured by the height sensor (Y) while the tow truck (C) chassis is being adjusted to the desired height. Based on the height information from the height sensor (Y), the height is brought to the desired value by pumping air into and emptying the air bellows (H) by means of the control valve (V) through the control unit (ECU). The load imposed on the tow truck (C) and the air suspension (S) causes changes in the pressure sensor (B) value. The load on the tow truck (C) or on the air suspension (S) can be calculated by measuring the pressure value of the pressure sensor (B).

In an embodiment of the invention, the load on the tow truck (C) or the load on the air suspension (S) can be calculated by measuring the pressure of the bellows by way of the pressure sensor (B) disposed in the air bellows (H).

In the trailer mode estimation method (100) according to the invention, the load value on the air suspension (S) can be measured by the pressure sensors (B) connected to the air bellows (H), and the load chance can thus be calculated.

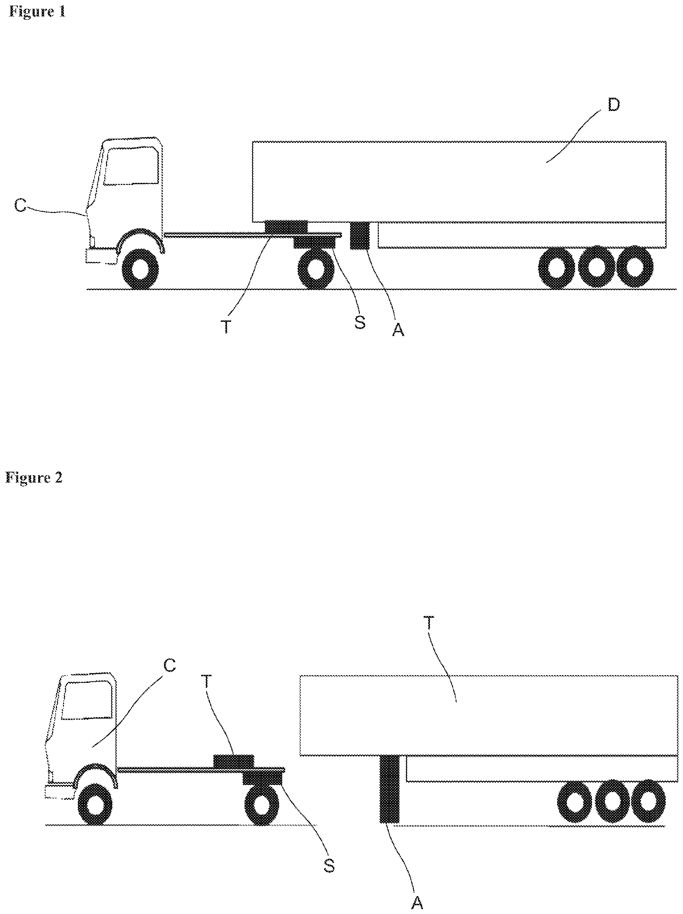

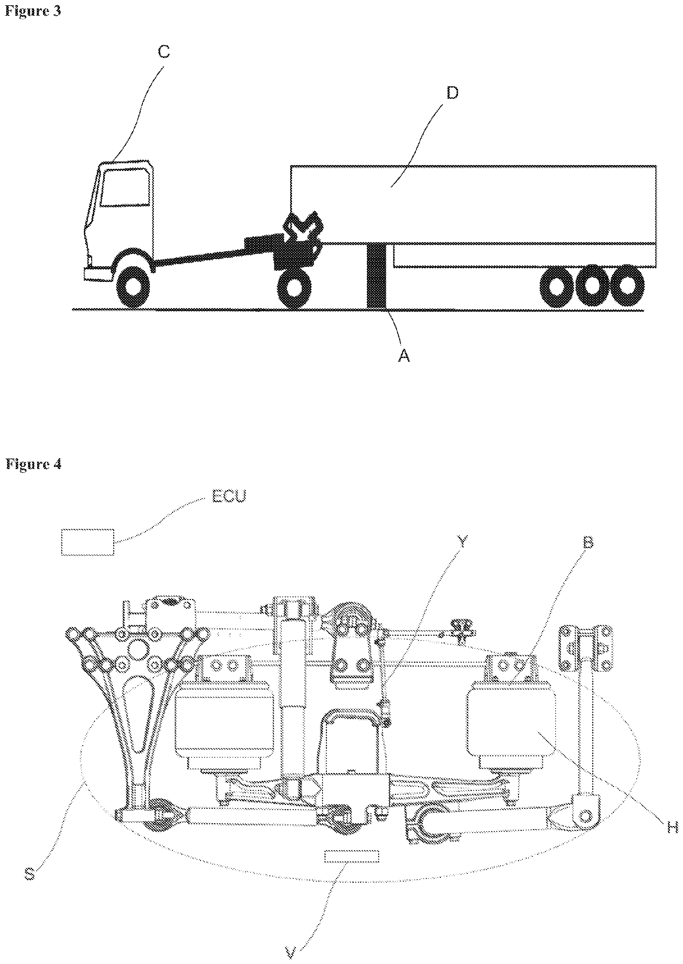

Before the trailer (D) is detached from the tow truck (C), the legs (A) provided in the trailer (D) are lowered, and the trailer (D) is carried on such legs (A) (Fig. 2). Carriage of the trailer (D) on the legs (A) presents the trailer (D) detachment mode. In the trailer (D) detachment mode, the load imposed on the air suspension (S) of the tow truck (C) decreases as well. While the trailer (D) assumes detachment mode, the level of the air bellows (H) and of the tow truck (C) chassis must be lowered by deflating the air suspension (S); otherwise, the chassis and trailer (D) will collide while the tow truck (C) moves forward (Fig. 3).

In the trailer mode estimation method (100), the load value on the air suspension (S) is continuously measured (110). The load value of the air suspension (S) is measured by the pressure sensor (B). It is controlled by the control unit (ECU) whether there is any decrease in the load value measured by the pressure sensor (B) or not. When the load value of the air suspension (S) tends to decrease, the control unit (ECU) determines the decrease in the load value (120).

The decrease in the load value of the air suspension (S) may result from unloading of the trailer (D), or from the detachment of the trailer (D). In order to detect the reason for the decreasing tendency in the load value, the control unit (ECU) signals the control valve (V) connected to the air bellows (H) so that the air bellows (H) will be deflated and the height of the air suspension (S) will be lowered (130). The control valve (V) allows the air outlet in a way to reduce the air inside the air bellows (H). Hence, the control unit (ECU) lowers down the height of the air suspension (S).

Subsequent to lowering the height of the air suspension (S), the load value of the air suspension (S) is re-measured (140). The air suspension (S) load is re-measured by the control unit (ECU) while the load value of the air suspension (S) is re-measured through the pressure sensor (B). If the load value is maintained even when the air suspension (S) height is lowered, the control unit (ECU) detects that the trailer (D) is in unloading mode (150). In this case, the control unit (ECU) does not perform any operation. The decrease in the load value of the air suspension (S) is detected due to the unloading mode of the trailer (D).

It is understood that the trailer (D) is in detachment mode (160) when the load value of the air suspension (S) is re-measured subsequent to lowering the height of the air suspension (S) (140), when the air suspension (S) height is lowered, and if a decrease in the load value is measured as well. When the air suspension (S) height is lowered, the air suspension (S) load is re-measured by the control unit (ECU) while the load value thereof is re-measured through the pressure sensor (B). If a decrease in the load value is measured when the air suspension (S) is lowered, the control unit (ECU) detects that the trailer is in detachment mode (160).

When the control unit (ECU) detects that the trailer (D) is in detachment mode, it lowers the air suspension (S) down to the defined height value of the tow truck so that the chassis will not collide with the trailer (D) (170). The control unit (ECU) signals the control valve (V) to deflate the air bellows (H) in order that the air suspension (S) height will be lowered. The control valve (V) empties the air inside the air bellows (H), and thus lowers the height of the air suspension (S). The height value defined for the tow truck (C) is stored in the memory of the control unit (ECU). In the trailer (D) unloading mode, the control unit (ECU) lowers the air suspension (S) down to the height value defined in the memory thereof.

In an embodiment of the trailer mode estimation method (100) according to the invention, in the trailer (D) unloading mode, the control unit (ECU) measures the load status of the air suspension (S) and it lowers the level of the air suspension (S) when the load status approximates to the empty load of the tow truck (C), lowering it down to the height value defined for the tow truck (C).

In an embodiment of the trailer mode estimation method (100) according to the invention, in the trailer (D) unloading mode, the control unit (ECU) waits until the tow truck (C) operates and starts to accelerate, and it lowers the level of the air suspension (S) when the tow truck (C) starts to accelerate, lowering it down to the height value defined for the tow truck (C). Thus, the chassis of the tow truck (C) is prevented from colliding with the trailer (D).

With the trailer mode estimation method (100) according to the invention, the trailer detachment-unloading mode of the tow truck (C) is estimated. Said estimation is made based on the load information of the air suspension (S). When the trailer (D) supporting legs (A) are lowered, some of the load is transferred from the tow truck (C) to the trailer. The load information of the air suspension (S) is measured, and thus the trailer (D) detachment mode can be estimated. While the load measurement of the air suspension (S) is being made, it is detected whether the load carried by the trailer (D) is unloaded, or the trailer (D) supporting legs are lowered down or not. Whether the load is transferred to the trailer (D) or not is detected based on the pressure value received from the pressure sensor (B) by lowering the height level of the air suspension (S).

## Claims

1. A trailer mode estimation method (100) which allows for determining, from a load amount of the rear suspension of a tow truck (C), whether a trailer (D) is in detachment or unloading mode in heavy commercial vehicles with an air suspension (S) in the rear axle used as tow trucks, said method comprising the process steps of:
- measuring a load value of the air suspension (S) (110),
- determining the decreasing tendency of the load value of the air suspension (S) (120), and
- lowering the height of the air suspension (S) (130), 2. and
**characterized by the process steps of:**
- re-measuring the load value of the air suspension (S) (140),
- determining that the trailer (D) unloading mode is present if the load value of the air suspension (S) is maintained, and performing no operation in this mode (150),
- determining that the trailer (D) detachment mode is present if the load value of the air suspension (S) tends to decrease (160), and
- lowering the air suspension (S) down to the defined height value (170).

2. A trailer mode estimation method (100) as in Claim 1, **characterized by** determining whether there is any decrease based on the load value measured through a pressure sensor (B) by means of a control unit (ECU), in the process step of determining the decreasing tendency of the load value of the air suspension (S) (120).

3. A trailer mode estimation method (100) as in Claim 1, **characterized by** signaling, in order to detect the reason for the decreasing tendency in the load value, a control valve (V) connected to an air bellows (H) by the control unit (ECU) so that the air bellows (H) will be deflated, in the process step of decreasing the air suspension (S) height (130).

4. A trailer mode estimation method (100) as in Claim 1, **characterized by** re-measuring the air suspension (S) load by the control unit (ECU) and re-measuring the load value of the air suspension (S) through the pressure sensor (B), in the process step of measuring the load value of the air suspension (S) (140).

5. A trailer mode estimation method (100) as in Claim 1, **characterized by** detecting the decrease in the load value of the air suspension (S) due to the unloading mode of the trailer (D) by the control unit (ECU) and performing no operation, in the process step of determining that the trailer (D) unloading mode is present if the load value of the air suspension (S) is maintained and performing no operation (150).

6. A trailer mode estimation method (100) as in Claim 1, **characterized by** re-measuring the air suspension (S) load through the pressure sensor (B) when the air suspension (S) height is lowered by the control unit (ECU), and detecting, via the control unit (ECU) again, that the trailer is in detachment mode if a decrease in the load value is measured upon lowering the height, in the process step of determining that the trailer (D) detachment mode is present if the load value of the air suspension (S) tends to decrease (160).

7. A trailer mode estimation method (100) as in Claim 1, **characterized by** signaling the control valve (V) to deflate the air bellows (H) by the control unit (ECU) in order to decrease the air suspension (S) height and lowering the air suspension (S) down to the height value defined in the memory thereof, in the process step of lowering the air suspension (S) down to the defined height value (170).

8. A trailer mode estimation method (100) as in Claim 7, **characterized by** measuring the load status of the air suspension (S) and lowering the level of the air suspension (S) when the load status approximates to the empty load of the tow truck (C), and lowering it down to the height value defined for the tow truck (C) by means of the control unit (ECU), in the process step of lowering the air suspension (S) down to the defined height value (170).

9. A trailer mode estimation method (100) as in Claim 7, **characterized by** waiting until the tow truck (C) operates and starts to accelerate and lowering the level of the air suspension (S) when the tow truck (C) starts to accelerate, and lowering it down to the height value defined for the tow truck (C) by means of the control unit (ECU), in the process step of lowering the air suspension (S) down to the defined height value (170).

## Patentansprüche

1. Schätzverfahren für den Anhängermodus (100) das es ermöglicht, aus einer Belastungsmenge der Hinterradaufhängung eines Abschleppfahrzeugs (C) zu bestimmen, ob sich ein Anhänger (D) bei schweren Nutzfahrzeugen mit einer Luftfederung (S) in der Hinterachse, die als Abschleppfahrzeugs verwendet werden, im Trenn- oder Entladungsmodus befindet, wobei das Verfahren die Prozessschritte **umfasst** von:
- Messen des Belastungswerts der Luftfederung (S) (110),
Bestimmen der abnehmenden Tendenz des Belastungswerts der Luftfederung (S) (120), und
Absenkung der Höhe der Luftfederung (S) (130), und
**gekennzeichnet durch die Prozessschritte von:**
- Nachvermessen des Belastungswerts der Luftfederung (S) (140),
Bestimmen, dass der Entladungsmodus des Anhängers (D) vorhanden ist, wenn der Belastungswert der Luftfederung (S) beibehalten wird, und Durchführung keiner Operation in diesem Modus (150),
die Bestimmen, dass der Anhänger (D) Abkopplungsmodus vorhanden ist, wenn der Belastungswert der Luftfederung (S) dazu neigt, abzunehmen (160), und
- Absenkung der Luftfederung (S) bis auf den definierten Höhenwert (170).

2. Schätzverfahren für den Anhängermodus (100) nach Anspruch 1, **dadurch gekennzeichnet, dass** auf der Grundlage des durch einen Drucksensor (B) mittels einer Steuereinheit (ECU) gemessenen Belastungswertes bestimmt wird, ob eine Abnahme vorliegt, in dem Prozessschritt der Bestimmung der abnehmenden Tendenz des Belastungswertes der Luftfederung (S) (120).

3. Schätzverfahren für den Anhängermodus (100) nach Anspruch 1, **dadurch gekennzeichnet, dass** zur Erkennung des Grundes für die abnehmende Tendenz des Belastungswertes ein Steuerventil (V) signalisiert wird, das durch die Steuereinheit (ECU) mit einem Luftbalg (H) verbunden ist, so dass der Luftbalg (H) in dem Prozessschritt der Abnahme der Höhe (130) der Luftfederung (S) entlüftet wird.

4. Schätzverfahren für den Anhängermodus (100) nach Anspruch 1, **dadurch gekennzeichnet, dass** die Belastung der Luftfederung (S) durch die Steuereinheit (ECU) nachvermessen wird und der Belastungswert der Luftfederung (S) durch den Drucksensor (B) nachvermessen wird, in dem Prozessschritt der Messung des Belastungswertes der Luftfederung (S) (140).

5. Schätzverfahren für den Anhängermodus (100) nach Anspruch 1, **dadurch gekennzeichnet, dass** die Abnahme des Belastungswertes der Luftfederung (S) aufgrund des Entladungsmodus des Anhängers (D) durch die Steuereinheit (ECU) erfasst wird und keine Operation durchgeführt wird, in dem Prozessschritt des Bestimmens, dass der Entladungsmodus des Anhängers (D) vorhanden ist, wenn der Belastungswert der Luftfederung (S) beibehalten wird, und keine Operation (150) durchgeführt wird.

6. Schätzverfahren für den Anhängermodus (100) nach Anspruch 1, **dadurch gekennzeichnet, dass** die Last der Luftfederung (S) durch den Drucksensor (B) nachgemessen wird, wenn die Höhe der Luftfederung (S) durch die Steuereinheit (ECU) abgesenkt wird, und dass über die Steuereinheit (ECU) erneut erfasst wird, dass sich der Anhänger im Ablösemodus befindet, wenn eine Abnahme des Belastungswertes bei der Absenkung der Höhe gemessen wird, in dem Prozessschritt des Bestimmens, dass der Ablösemodus des Anhängers (D) vorhanden ist, wenn der Belastungswert der Luftfederung (S) dazu neigt, abzunehmen (160).

7. Schätzverfahren für den Anhängermodus (100) nach Anspruch 1, **dadurch gekennzeichnet, dass** dem Steuerventil (V) durch die Steuereinheit (ECU) signalisiert wird, den Luftbalg (H) zu entlüften, um die Höhe der Luftfederung (S) abzusenken, und dass die Luftfederung (S) in dem Prozessschritt des Absenkens der Luftfederung (S) auf den definierten Höhenwert (170) auf den in ihrem Speicher definierten Höhenwert abgesenkt wird.

8. Schätzverfahren für den Anhängermodus (100) nach Anspruch 7, **dadurch gekennzeichnet, dass** der Belastungszustand der Luftfederung (S) gemessen wird und die Absenkung der Luftfederung (S) abgesenkt wird, wenn sich der Belastungszustand der Leerladung des Abschleppfahrzeugs (C) annähert, und im Prozessschritt der Absenkung der Luftfederung (S) auf den definierten Höhenwert (170) mittels der Steuereinheit (ECU) auf den für das Abschleppfahrzeug (C) definierten Höhenwert abgesenkt wird.

9. Schätzverfahren für den Anhängermodus (100) nach Anspruch 7, **dadurch gekennzeichnet, dass** gewartet wird, bis das Abschleppfahrzeug (C) in Betrieb ist und zu beschleunigen beginnt, und die Absenkung der Luftfederung (S) abgesenkt wird, wenn das Abschleppfahrzeug (C) zu beschleunigen beginnt, und Absenken auf den für das Abschleppfahrzeug (C) mit Hilfe der Steuereinheit (ECU) definierten Höhenwert im Prozessschritt der Absenkung der Luftfederung (S) auf den definierten Höhenwert (170).

## Revendications

1. Procédé d'estimation du mode remorque (100) qui permet de déterminer, à partir d'une quantité de charge de la suspension arrière d'une dépanneuse (C), si une remorque (D) est en mode détachement ou déchargement dans les véhicules commerciaux lourds avec une suspension pneumatique (S) dans l'essieu arrière utilisés comme dépanneuses, ledit procédé **comprenant** les étapes du processus de :
- mesurer une valeur de charge de la suspension pneumatique (S) (110),
- déterminer la tendance à la baisse de la valeur de la charge de la suspension pneumatique (S) (120), et
- abaisser la hauteur de la suspension pneumatique (S) (130), et
**caractérisé par les étapes du processus de :**
- re-mesurer la valeur de charge de la suspension pneumatique (S) (140),
- déterminer que le mode de déchargement de la remorque (D) est présent si la valeur de charge de la suspension pneumatique (S) est maintenue, et effectuer aucune opération dans ce mode (150),
- déterminer que le mode de détachement de la remorque (D) est présent si la valeur de charge de la suspension pneumatique (S) a tendance à baisser (160), et
- abaisser la suspension pneumatique (S) jusqu'à la valeur de hauteur définie (170).

2. Procédé d'estimation du mode remorque (100) selon la revendication 1, **caractérisé par** déterminer s'il y a une baisse en fonction de la valeur de la charge mesurée par un capteur de pression (B) au moyen d'une unité de contrôle (ECU), dans l'étape du processus consistant à déterminer la tendance à la baisse de la valeur de la charge de la suspension pneumatique (S) (120).

3. Procédé d'estimation du mode remorque (100) selon la revendication 1, **caractérisé par** signaler, afin de détecter la raison de la tendance à la baisse de la valeur de la charge, une soupape de commande (V) reliée à un soufflet pneumatique (H) par l'unité de commande (ECU) afin que le soufflet pneumatique (H) soit dégonflé, dans l'étape du processus consistant à diminuer la hauteur de la suspension pneumatique (S) (130).

4. Procédé d'estimation du mode remorque (100) selon la revendication 1, **caractérisé par** re-mesurer la charge de la suspension pneumatique (S) par l'unité de commande (ECU) et re-mesurer la valeur de la charge de la suspension pneumatique (S) par le capteur de pression (B), dans l'étape du processus consistant à re-mesurer la valeur de charge de la suspension pneumatique (S) (140).

5. Procédé d'estimation du mode remorque (100) selon la revendication 1, **caractérisé par** détecter la baisse de la valeur de charge de la suspension pneumatique (S) due au mode de déchargement de la remorque (D) par l'unité de commande (ECU) et effectuer aucune opération, dans l'étape du processus consistant à déterminer que le mode de déchargement de la remorque (D) est présent si la valeur de charge de la suspension pneumatique (S) est maintenue et effectuer aucune opération (150).

6. Procédé d'estimation du mode remorque (100) selon la revendication 1, **caractérisé par** re-mesurer la charge de la suspension pneumatique (S) par le capteur de pression (B) lorsque la hauteur de la suspension pneumatique (S) est abaissée par l'unité de commande (ECU), et détecter, via l'unité de commande (ECU) à nouveau, que la remorque est en mode de détachement si une diminution de la valeur de la charge est mesurée lors de l'abaissement de la hauteur, dans l'étape du processus consistant à déterminer que le mode de détachement de la remorque (D) est présent si la valeur de charge de la suspension pneumatique (S) a tendance à baisser (160).

7. Procédé d'estimation du mode remorque (100) selon la revendication 1, **caractérisé par** signaler à la soupape de commande (V) de dégonfler le soufflet pneumatique (H) par l'unité de commande (ECU) afin de diminuer la hauteur de la suspension pneumatique (S) et d'abaisser la suspension pneumatique (S) à la valeur de hauteur définie dans la mémoire de celle-ci, dans l'étape du processus consistant à abaisser la suspension pneumatique (S) jusqu'à la valeur de hauteur définie (170).

8. Procédé d'estimation du mode remorque (100) selon la revendication 7, **caractérisé par** mesurer l'état de charge de la suspension pneumatique (S) et abaisser le niveau de la suspension pneumatique (S) lorsque l'état de charge se rapproche de la charge à vide de la dépanneuse (C), et l'abaisser à la valeur de hauteur définie pour la dépanneuse (C) au moyen de l'unité de commande (ECU), dans l'étape du processus consistant à abaisser la suspension pneumatique (S) jusqu'à la valeur de hauteur définie (170).

9. Procédé d'estimation du mode remorque (100) selon la revendication 7, **caractérisé par** attendre jusqu'à ce que la dépanneuse (C) fonctionne et commence à accélérer et abaisser le niveau de la suspension pneumatique (S) lorsque la dépanneuse (C) commence à accélérer, et l'abaisser à la valeur de hauteur définie pour la dépanneuse (C) au moyen de l'unité de commande (ECU), dans l'étape du processus consistant à abaisser la suspension pneumatique (S) jusqu'à la valeur de hauteur définie (170).
